(19) Europäisches Patentamt
European Patent Office
Office européen des brevets

(11) **EP 4 040 346 B1**

(12) **EUROPEAN PATENT SPECIFICATION**

(45) Date of publication and mention
of the grant of the patent:
**29.04.2026 Bulletin 2026/18**

(21) Application number: **20938500.4**

(22) Date of filing: **07.12.2020**

(51) International Patent Classification (IPC):
*G06N 3/084* (2023.01)    *G06N 3/045* (2023.01)
*G06N 3/0464* (2023.01)    *G06N 3/0895* (2023.01)
*G06N 3/09* (2023.01)    *G06N 3/096* (2023.01)

(52) Cooperative Patent Classification (CPC):
**G06N 3/084; G06N 3/045; G06N 3/0464;
G06N 3/0895; G06N 3/09; G06N 3/096**

(86) International application number:
**PCT/JP2020/045416**

(87) International publication number:
**WO 2022/123619 (16.06.2022 Gazette 2022/24)**

(54) **LEARNING SYSTEM, LEARNING METHOD, AND PROGRAM**

LERNSYSTEM, LERNVERFAHREN UND PROGRAMM

SYSTÈME D'APPRENTISSAGE, PROCÉDÉ D'APPRENTISSAGE ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.08.2022 Bulletin 2022/32**

(73) Proprietor: **Rakuten Group, Inc.**
**Setagaya-ku**
**Tokyo 158-0094 (JP)**

(72) Inventors:
• **CHAE, Yeongnam**
**Tokyo 158-0094 (JP)**
• **KIM, Mijung**
**Tokyo 158-0094 (JP)**
• **PRAKASHA, Preetham**
**Tokyo 158-0094 (JP)**

(74) Representative: **Hoffmann Eitle**
**Patent- und Rechtsanwälte PartmbB**
**Arabellastraße 30**
**81925 München (DE)**

(56) References cited:
• **JIANYI LI ET AL: "Few-Shot Image Classification
via Contrastive Self-Supervised Learning",
ARXIV.ORG, CORNELL UNIVERSITY LIBRARY,
201 OLIN LIBRARY CORNELL UNIVERSITY
ITHACA, NY 14853, 23 August 2020 (2020-08-23),
XP081746689**
• **SOLMAZ BERKAN ET AL: "Fine-grained
recognition of maritime vessels and land
vehicles by deep feature embedding", IET
COMPUTER VISION, THE INSTITUTION OF
ENGINEERING AND TECHNOLOGY, MICHAEL
FARADAY HOUSE, SIX HILLS WAY, STEVENAGE,
HERTS. SG1 2AY, UK, vol. 12, no. 8, 1 December
2018 (2018-12-01), pages 1121 - 1132,
XP006070653, ISSN: 1751-9632, DOI: 10.1049/
IET-CVI.2018.5187**
• **KARLINSKY, LEONID ET AL.: "RepMet:
Representative- based metric learning for
classification and few- shot object detection",
ARXIV, 18 November 2018 (2018-11-18),
Retrieved from the Internet <URL:https://arxiv.
org/pdf/1806.04728v3.pdf> [retrieved on
20210219]**
• **WANG, YAQING ET AL.: "Generalizing from a
Few Examples: A Survey on Few-Shot Learning",
ARXIV, 29 March 2020 (2020-03-29), Retrieved
from the Internet <URL:https://arxiv.org/pdf/
1904.05046v3.pdf> [retrieved on 20210219]**

EP 4 040 346 B1

- **RIOS, ANTHONY ET AL.: "Few-Shot and Zero-Shot Multi- Label Learning for Structured Label Spaces, 2018 Conference on Empirical Methods in Natural Language Processing", ACL ANTHOLOGY, 2018, pages 3132 - 3142, Retrieved from the Internet <URL:https://www.aclweb.org/anthology/D18-1352.pdf> [retrieved on 20210219]**

**Description**

Technical Field

The present disclosure relates to a learning system, a learning method, and a program.

Background Art

Hitherto, machine learning has been used in various fields, for example, image analysis and natural language processing. In supervised machine learning, it takes time to prepare training data, and therefore it is required to increase the accuracy of the learning model through use of a smaller amount of training data. For example, in Non Patent Literature 1, there is described a method called "few-shot object detection" which creates a learning model capable of recognizing data having an unknown label based on a very small amount of training data.

Citation List

Non Patent Literature

[NPL 1] Leonid Karlinsky, Joseph Shtok, Sivan Harary, Eli Schwartz, Amit Aides, Rogerio Feris, Raja Giryes, and Alex M Bronstein. Rep Met: Representative-based metric learning for classification and few-shot object detection. In CVPR, 2019.
JIANYI LI ET AL: "Few-Shot Image Classification via Contrastive Self-Supervised Learning" describes few-shot image classification via contrastive self-supervised learning.

Summary of Invention

Technical Problem

For multi-label data, it is particularly time-consuming to prepare the training data because there are many combinations of labels. However, the method of Non Patent Literature 1 targets data having a single label, and therefore this method is not applicable to multi-label data. For this reason, with the method of the related art, unless a larger amount of training data is prepared, it is not possible to increase the accuracy of a learning model which is capable of recognizing multi-label data.

An object of the present disclosure is to increase accuracy of a learning model capable of recognizing multi-label data through use of a small amount of training data.

Solution to Problem

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention. According to one aspect of the an example, there is provided a learning system including: first calculation means configured to calculate, when multi-label query data is input to a learning model, a first loss based on an output of the learning model and a target output; feature amount acquisition means configured to acquire a feature amount of the multi-label query data and a feature amount of support data corresponding to the multi-label query data, which are calculated based on a parameter of the learning model; second calculation means configured to calculate a second loss based on the feature amount of the multi-label query data and the feature amount of the support data; and adjustment means configured to adjust the parameter based on the first loss and the second loss.

Advantageous Effects of Invention

According to the present disclosure, it is possible to increase the accuracy of the learning model capable of recognizing the multi-label data by using a small amount of training data.

Brief Description of Drawings

FIG. 1 is a diagram for illustrating an example of an overall configuration of a learning system.
FIG. 2 is a diagram for illustrating an example of images posted on a website.
FIG. 3 is a function block diagram for illustrating an example of functions of the learning system.
FIG. 4 is a diagram for illustrating an example of an overall picture of functions of a learning terminal.
FIG. 5 is a table for showing an example of a data set.
FIG. 6 is a graph for showing an example of a distribution of individual labels.
FIG. 7 is a graph for showing an example of a distribution of individual classes.
FIG. 8 is a diagram for illustrating an example of a query image and support images included in individual episodes.
FIG. 9 is a flow chart for illustrating an example of processing to be executed in the learning system.

Description of Embodiments

[1. Overall Configuration of Learning System]

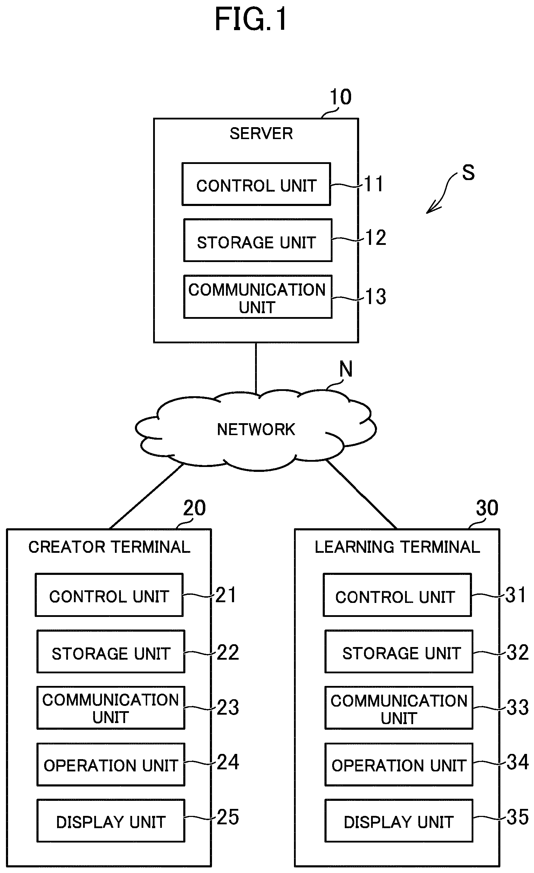

Description is now given of an example of an embodiment of a learning system according to the present disclosure. FIG. 1 is a diagram for illustrating an example of an overall configuration of the learning system. As illustrated in FIG. 1, a learning system S includes a server 10, a creator terminal 20, and a learning terminal 30. Those parts can be connected to a network N, such as the Internet and a LAN. In FIG. 1, one server 10, one creator terminal 20, and one learning terminal 30 are illustrated, but there may be a plurality of servers 10, a plurality of creator terminals 20, and a plurality of learning terminals 30.

The server 10 is a server computer. The server 10 includes a control unit 11, a storage unit 12, and a communication unit 13. The control unit 11 includes at least one microprocessor. The storage unit 12 includes a volatile memory, for example, a RAM, and a nonvolatile memory, for example, a hard disk drive. The communication unit 13 includes at least one of a communication interface for wired communication and a communication interface for wireless communication.

The creator terminal 20 is a computer to be operated by a creator. The creator is a person creating data to be input to the learning model. In this embodiment, an image is described as an example of the data. For this reason, in this embodiment, the term "image" can be read as "data". The data to be input to the learning model is not limited to images. Examples of other data are described in modification examples described later.

For example, the creator terminal 20 is a personal computer, a smartphone, or a tablet terminal. The creator terminal 20 includes a control unit 21, a storage unit 22, a communication unit 23, an operation unit 24, and a display unit 25. Physical components of the control unit 21, the storage unit 22, and the communication unit 23 may be similar to those of the control unit 11, the storage unit 12, and the communication unit 13, respectively. The operation unit 24 is an input device such as a mouse or a touch panel. The display unit 25 is a liquid crystal display or an organic EL display.

The learning terminal 30 is a computer for executing learning by a learning model. For example, the learning terminal 30 is a personal computer, a smartphone, or a tablet terminal. The learning terminal 30 includes a control unit 31, a storage unit 32, a communication unit 33, an operation unit 34, and a display unit 35. Physical components of the control unit 31, the storage unit 32, the communication unit 33, the operation unit 34, and the display unit 35 may be similar to those of the control unit 11, the storage unit 12, the communication unit 13, the operation unit 24, and the display unit 25, respectively.

Programs and data described as being stored into the storage units 12, 22, and 32 may be supplied thereto via the network N. Further, the respective hardware configurations of the server 10, the creator terminal 20, and the learning terminal 30 are not limited to the above-mentioned examples, and various types of hardware can be applied thereto. For example, the hardware configuration may include at least one of a reading unit (e.g., an optical disc drive or a memory card slot) for reading a computer-readable information storage medium, and an input/output unit (e.g., a USB port) for inputting and outputting data to/from an external device. For instance, at least one of the program and the data that are stored on the information storage medium may be supplied via at least one of the reading unit and the input/output unit.

[2. Outline of Learning System]

In this embodiment, description is given of processing of the learning system S by taking, as an example, a case in which an image of an article for sale to be sold through a website is input to the learning model. For example, the creator is a clerk at a shop selling the article for sale. The creator edits a photograph of the article for sale by using image editing software installed on the creator terminal 20, and creates an image to be posted on the website.

The image editing software is used to add artificial objects to the photograph of the article for sale. Each object is a component of the image. The article for sale being a subject of the image is also one of the objects. The objects added to the photograph by the image editing software are electronic images. For example, for the purpose of promoting sales of the article for sale, the creator adds at least one of a digital text, a digital frame, and a color bar for to photograph of the article for sale.

The digital text is text added to the photograph by using the image editing software. The digital text is different from a natural text. The natural text is text included in the article for sale itself. In other words, the natural text is the text included in the photograph before editing. For example, the natural text is a name of the article for sale or a brand name printed on the article for sale.

The digital frame is a frame added to the photograph by using the image editing software. In this embodiment, there is described a case in which a digital frame of 1 pixel and a digital frame of 2 pixels or more are present, but the digital frame may have any thickness. The digital frame is different from a natural frame. The natural frame is a frame included in the article for sale itself. In other words, the natural frame is the frame included in the photograph before editing. For example, the natural frame is an edge of a box of the article for sale.

The color bar is an image showing a color variation of the article for sale. The color bar includes a bar of each of a plurality of colors. For example, in the case of an item of clothing having 10 color variations, the color bar includes bars for 10 colors. When the creator has created an image by editing the photograph of the article for sale, the creator uploads the edited image to the server 10. The uploaded image is stored in an image database of the server 10 and posted on the website.

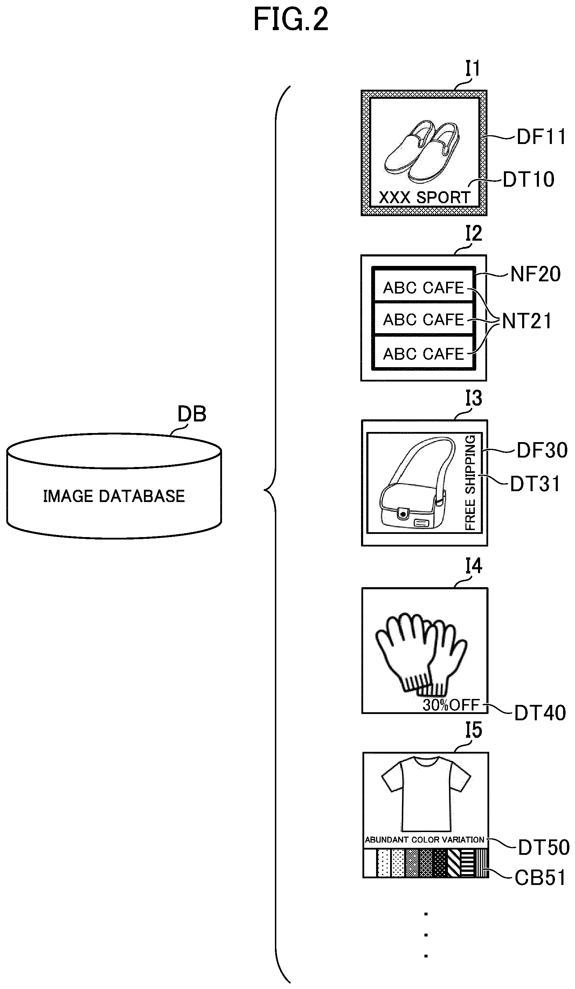

FIG. 2 is a diagram for illustrating an example of images posted on the website. In FIG. 2, a square thumbnail is illustrated as an example of the images. As illustrated in FIG. 2, an image I1 including a digital text DT 10 and a digital frame DF11 of 2 pixels or more is added to a photograph of a pair of shoes. An image I2 includes a natural frame NF20, which is the edge of a box of coffee, and a natural text NT21 of the name of the article for sale printed on the package. In the image I2, a digital text or the like is not added.

In an image I3, a digital frame DF30 of 1 pixel and a digital text DT31 are added to an image of a bag. In an image I4, a digital text DT40 is added to an image of a pair of gloves. In an image I5, a digital text DT50 and a color bar CB51 consisting of a nine-color bar are added to an image of an item of clothing.

As in this embodiment, when the creator can freely edit the image, an image which has a poor design and does not improve a willingness to purchase by the customer may be uploaded. In contrast, an image which is well designed and improves the willingness to purchase by the customer may be uploaded. For this reason, it is important to identify the edited content (artificially decorated portion) made to the image.

In view of this, the learning terminal 30 creates a learning model for labeling the edited content made to the image. The learning model is a model which uses machine learning. Various methods can be used for the machine learning itself. For example, a convolutional neural network or a recursive neural network can be used. The learning model in this embodiment is a supervised model or a semi-supervised model, but an unsupervised model may be used.

As in this embodiment, the learning model performing labeling is sometimes referred to as "classification learner." Labeling refers to conferring of labels to input images. The labels are the classification of the images. In this embodiment, the label means the edited content made to the image. As an example of the labels, the following labels 0 to 6 are described, but the labels are not limited to the example of this embodiment, and any label can be set.

A (label 0) image does not include any edited content, a (label 1) image includes a digital text, a (label 2) image includes a natural text, a (label 3) image includes a digital frame of 2 pixels or more, a (label 4) image includes a digital frame of 1 pixel, a (label 5) image includes a natural frame, and a (label 6) image includes a color bar. Label 0 means that the image does not correspond to any of labels 1 to 6.

In this embodiment, the output of the learning model includes seven binary values indicating whether or not the image belongs to each of labels 0 to 6. As an example, a case in which the output of the learning model is expressed in a vector format is described, but the output of the learning model may have any format. For example, the output of the learning model may have an array format, a matrix format, or a single numerical value. Aa another example, in place of the above-mentioned seven values, the output of the learning model may be a numerical value of from 0 to 6 indicating the label to which the image belongs. In this case, when the image belongs to label 2 and label 5, the output of the learning model is a combination of the numerical values of 2 and 5.

For example, when the value of a certain label is 0, this means that the image does not belong to that label. For example, when the value of a certain label is 1, this means that the image belongs to that label. For example, when the output of the learning model is [0, 1, 0, 0, 1, 0, 0], this means that the image belongs to label 1 and label 4. The output of the learning model is not required to be a binary value of 0 or 1, and an intermediate value may exist. The intermediate value indicates a probability (likelihood) of the image belonging to the label. For example, when the value of a certain label is 0.9, this means that there is a 90% probability that the image belongs to that label.

An image database DB includes a mixture of single-label images and multi-label images. A single label indicates that an image belongs to only one label. In the example of FIG. 2, the image I4 is a single label image. A multi-label indicates that an image belongs to a plurality of labels. In the example of FIG. 2, images I1, I2, I4, and I5 are multi-label images. In this embodiment, there is no image belonging to label 0 as well as belonging to labels 1 to 6, but an image may belong to any combination of labels 1 to 6. For this reason, depending on the image, an image may belong to three or more of labels 1 to 6.

As described regarding the related art, attempting to create a learning model capable of handling multi-labels requires a lot of time and effort to prepare the training data because there are a large number of label combinations. For this reason, it is difficult to create a learning model capable of handling multi-labels. Further, images such as those in this embodiment are difficult to label for the following two reasons.

The first reason is that the images stored in the image database DB not only include images of popular articles for sale, but also include many images of less popular articles for sale. Such a distribution is referred to as "long-tail distribution." A population having a long-tail distribution includes a wide variety of images. For this reason, even when a large amount of training data is prepared, the training data includes a wide variety of patterns as the shapes of the articles for sale, and hence it is difficult for the learning model to recognize the features of the images.

The second reason is that most of the images stored in the image database DB are images of the external appearance of an article for sale, and portions, for example, digital text, are not as noticeable, like fine grains. For this reason, it is difficult for the learning model to recognize features, for example, digital text. Multi-label images are even more difficult because several features that are not noticeable, for example, fine grains, are required to be recognized. Such a problem can also be referred to as "fine-grained multi-label classification problem." Further, in images like those in this embodiment, there are also problems in that it is difficult to distinguish between digital text and natural text, and it is also difficult to distinguish between digital frames and natural frames.

In view of the above, the learning system S of this embodiment creates a learning model capable of handling multi-labels by applying few-shot learning which is based on a contrastive learning approach. As a result, even in cases in which the images have a long-tail distribution and features that are not noticeable like fine grains (even when the above-mentioned first and second reasons exist), the accuracy of the learning model is increased by using less training data. The details of the learning system S are now described.

[3. Functions of Learning System]

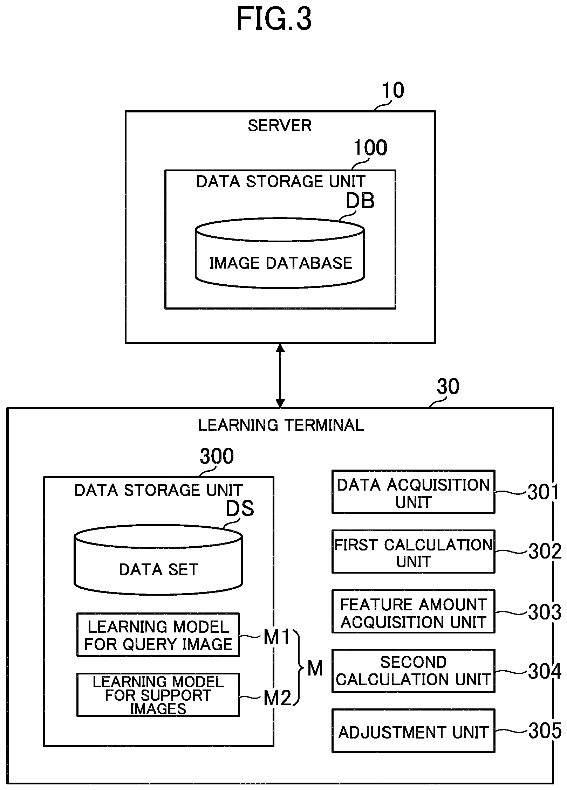

FIG. 3 is a function block diagram for illustrating an example of the functions of the learning system S. In FIG. 3, the functions of the server 10 and the learning terminal 30 are illustrated, and the functions of the creator terminal 20 are omitted. It is sufficient that the creator terminal 20 have a function of editing an image based on a creator's operation, and a function of uploading an edited image.

[3-1. Functions of Server]

In the server 10, a data storage unit 100 is implemented. The data storage unit 100 is mainly implemented by the storage unit 12. The data storage unit 100 stores the data required for learning by the learning model. For example, the data storage unit 100 stores the image database DB. As described with reference to FIG. 2, the image database DB stores images uploaded by each of a plurality of creators. The image database DB also stores images (images belonging to label 0) that have only been cropped to a predetermined size and have not been artificially decorated.

In this embodiment, the images stored in the image database DB have a predetermined format (for example, size, resolution, number of bits of color, and filename extension), but the image database DB may store images of any format. Further, the images stored in the image database DB are downloaded to the learning terminal 30 and then labeled by the user of the learning terminal 30, but labeled images may be stored in the image database DB.

[3-2. Functions of Learning Terminal]

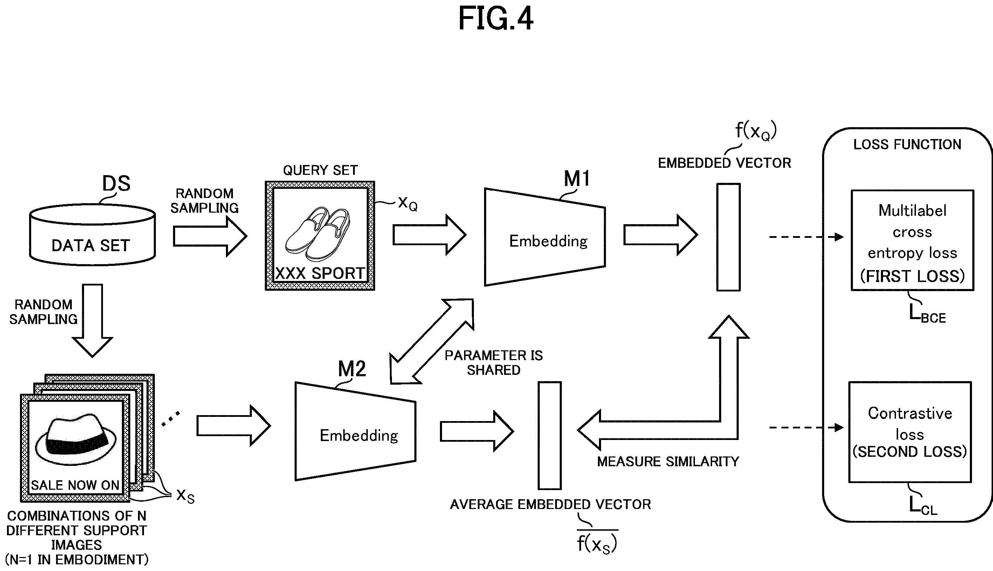

FIG. 4 is a diagram for illustrating an example of an overall picture of the functions of the learning terminal 30. The functions of the learning terminal 30 illustrated in FIG. 3 are now described with reference to FIG. 4. In the learning terminal 30, a data storage unit 300, a data acquisition unit 301, a first calculation unit 302, a feature amount acquisition unit 303, a second calculation unit 304, and an adjustment unit 305 are implemented. The data storage unit 300 is mainly implemented by the storage unit 32, and each of the data acquisition unit 301, the first calculation unit 302, the feature amount acquisition unit 303, the second calculation unit 304, and the adjustment unit 305 is mainly implemented by the control unit 31.

[Data Storage Unit]

The data storage unit 300 stores the data required for learning by learning models M1 and M2. When the learning model M1 and the learning model M2 are not distinguished in the following description, the learning models are simply referred to as "learning model M." For example, the data storage unit 300 stores a data set DS for learning. The data set DS stores each of a plurality of images conferred with a label that is a correct answer.

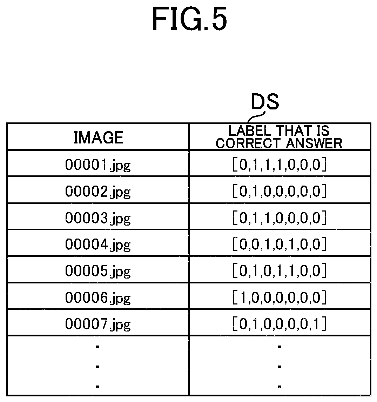

FIG. 5 is a table for showing an example of the data set DS. As shown in FIG. 5, the data set DS stores a large number of pairs of images and labels that are correct answers. Those pairs are used to adjust a parameter of the learning model M. The pairs are also referred to as "training data," "teacher data," or "correct-answer data." The label that is the correct answer includes a value indicating whether or not the image belongs to each of labels 0 to 6. That is, the label that is the correct answer is the target output (is the content to be output by the learning model M).

In this embodiment, there is described a case in which a part of the images in the image database DB are stored in the data set DS, but all of the images in the image database DB may be stored in the data set DS. For example, the user of the learning terminal 30 accesses the server 10, and downloads a part of the images in the image database DB. The user displays the downloaded images on the display unit 35, and confers the labels that are the correct answers to create the data set DS.

For example, it is assumed that the image database DB contains about 200 million images, and users have randomly sampled and labeled about 40,000 to about 50,000 images from among those images. As a general rule, the images in this embodiment can be freely edited, and hence there may be some edits which creators tend to perform some edits that creators are less likely to perform. For this reason, the labels of the randomly sampled images may have a long-tail distribution.

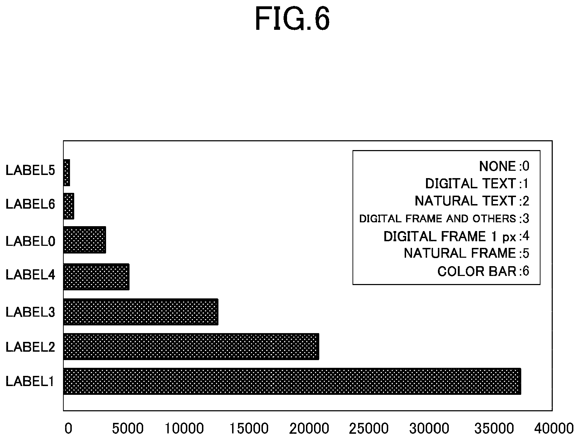

FIG. 6 is a graph for showing an example of a distribution of individual labels. The vertical axis of FIG. 6 shows each of labels 0 to 6, and the horizontal axis shows the total number of images (number of samples) for each of the labels. For example, when a multi-label image having label 1 and label 4 is randomly sampled, this single image increases the total number of each of the images of label 1 and label 4 by 1. In the example of FIG. 6, there are an extremely large number of images having label 1, and there are an extremely small number of images having label 5. The distribution of FIG. 6 is a long-tail distribution because the total number of images is not uniform and is unbalanced.

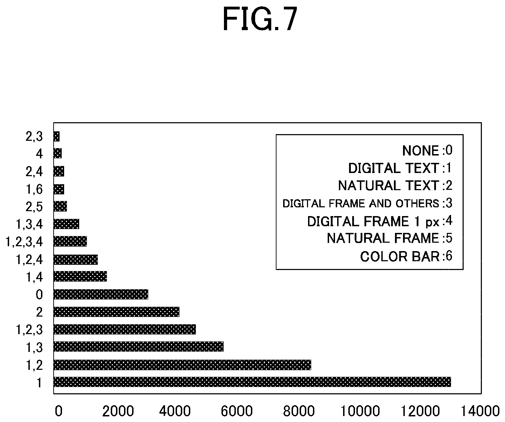

FIG. 7 is a graph for showing an example of the distribution of individual classes. A class is a concept similar to a label in a sense that the class is a type of classification, but is different from a label in terms of a class classification problem and a label classification problem. In this embodiment, the class classification problem is that there is no overlap between subsets, and the population is required to belong to any one subset. The label classification problem is that there is overlap between subsets or that the population does not belong to any subset.

When there is a mixture of single-label images and multi-label images like in this embodiment, at least one label corresponds to a class. The images belong to any class, but not to another class. For example, the multi-label images belong to a certain label and to another label, but do not belong to a certain class and to another class. When there are 41 label combinations in the population of randomly sampled images, this means that there are 41 classes in the population.

In the example of FIG. 7, only the distributions of classes having a total number of images which is equal to or more than a threshold value (for example, 100) are shown. For this reason, in practice, there are also classes having a total number of images which is less than the threshold value. The vertical axis of FIG. 7 shows each of the 15 classes having a total number of images which is equal to or more than the threshold value, and the horizontal axis shows the total number of images for each of the classes. In the example of FIG. 7, there are an extremely large number of images of the class showing only label 1, and there are an extremely small number of images of the class showing the combination of label 2 and label 3. For this reason, similarly to the distribution of FIG. 6, the distribution of FIG. 7 is a long-tail distribution because the total number of images is not uniform and is unbalanced.

In FIG. 6 and FIG. 7, for convenience of describing the long-tail distribution, as an example, there are illustrated a case in which labels are conferred to about 40,000 to about 50,000 images, but the number of images to which the user confers labels may be less than this. For example, the user may randomly sample several hundred to several thousand images, and confer correct-answer labels to those images.

Further, the method of conferring the label that is the correct answer to an image is not limited to the example described above, and any method can be used. For example, the user may use a known clustering method to confer the correct-answer label to an image. Moreover, for example, the user may use a learning model M that has learned a single label image to confer the correct-answer label to an image.

The data storage unit 300 stores not only the data set DS, but also the learning model M (actual data of the learning model M). The learning model M includes a program and a parameter. As the format itself of the program and the parameter of the learning model M, various formats used in machine learning can be used. For example, the program of the learning model M includes code defining processing (for example, convoluting, embedded vector calculation, and pooling) of each of a plurality of layers. Further, for example, the parameter of the learning model M includes a weighting coefficient and a bias. The parameter of the learning model M is referred to by the program of the learning model M.

As illustrated in FIG. 3 and FIG. 4, in this embodiment, the data storage unit 300 stores a learning model M1 for a query image $x_Q$ and a learning model M2 for support images $x_S$. The learning model M1 is an example of a first learning model. The learning model M2 is an example of a second learning model. The query image $x_Q$ is input to the learning model M1. The support images $x_S$ are input to the second learning model M2. Details of the query image $x_Q$ and the support images $x_S$ are described later.

The parameter of the learning model M1 and the parameter of the learning model M2 are shared. That is, the parameter of the learning model M1 and the parameter of the learning model M2 are the same. The program of the learning model M1 and the program of the learning model M2 are also the same, and the internal structure, for example, the layers, is also the same. That is, any one of the learning model M1 and the learning model M2 is a copy of the other.

The data stored by the data storage unit 300 is not limited to the example described above. It is sufficient that the data storage unit 300 store the data required for the learning by the learning model M. For example, the data storage unit 300 may store the data set DS divided into three parts: a training data set, a verification data set, and a test data set. Further, for example, the data storage unit 300 may store the same database as the image database DB.

[Data Acquisition Unit]

The data acquisition unit 301 acquires the images to be used for the learning by the learning model M. In this embodiment, the data acquisition unit 301 acquires the query image $x_Q$ and the support image $x_S$ from an image group having a long-tail distribution in multi-labels. The data acquisition unit 301 may also acquire the query image $x_Q$ and the support image $x_S$ from an image group which does not have a long-tail distribution.

The image group is a collection of a plurality of images. In this embodiment, the image group is stored in the image database DB having a long-tail distribution. When the number of samples of the data set DS is a certain level, the data set DS may also have a long-tail distribution, and therefore a collection of a plurality of images stored in the data set DS may correspond to the above-mentioned image group.

The long-tail distribution is a distribution like that described with reference to FIG. 6 and FIG. 7. The definition itself of the long-tail distribution may follow the general definition. For example, the distribution may be considered to be a long-tail distribution when the difference between the total number of images of the label or class having the largest number of images and the total number of images of the label or class having the smallest number of images is equal to or more than a threshold value. Further, for example, the distribution may be considered to be a long-tail distribution when the difference between the sum of the total number of images of the highest "a" ("a" is an integer of 2 or more) labels or classes and the sum of the total number of images of the lowest "b" ("b" is an integer of 2 or more) labels or classes is equal to or more than a threshold value.

The learning model M is a model which recognizes objects included in an image, and therefore a multi-label query image $x_Q$ is described as an example of query data. Further, an example of support data is the support image $x_S$ corresponding to the query image $x_Q$. The query image $x_Q$ and the support image $x_S$ are each images used in few-shot learning.

The query image $x_Q$ is an image of a new class that has not been learned by the learning model M. The query image $x_Q$ is sometimes referred to as "test image." The support image $x_S$ is an image of the same class as the query image $x_Q$ or of a different class from the query image $x_Q$. For example, when general classes have been learned by the learning model M through use of a training data set for general object recognition, the class to be learned through use of the query image $x_Q$ and the support image $x_S$ is, in principle, a class which has not been learned by the learning model M.

The data acquisition unit 301 randomly samples the image group stored in the image database DB to acquire the image group, and stores pairs of the individual acquired images and the labels that are the correct answers in the data set DS. As illustrated in FIG. 4, the data acquisition unit 301 acquires the query image $x_Q$ and the support image $x_S$ by randomly sampling the image group stored in the data set DS.

The data acquisition unit 301 randomly acquires the query image $x_Q$ and the support image $x_S$ from the data set DS for each episode. An episode is a part of a series of processes in few-shot learning. In few-shot learning, a few episodes are repeated. For example, for each episode, there is an image set of at least one query image $x_Q$ and at least one support image $x_S$.

The few-shot learning is performed by following a setting called "N-Way K-shot." Here, N means the number of classes per episode, K means the number of images per episode, and N and K are natural numbers. In general, as N becomes smaller, the accuracy of the learning model M becomes higher, and as K becomes higher, the accuracy of the learning model M becomes higher. In this embodiment, a case in which N is 1 and K is 5 (that is, a case of 1-way 5-shot) is described, but N and K may be any values.

In this embodiment, there is described a case in which there is an episode corresponding to a part of the combinations of labels that are possible for the multi-labels, but there may be episodes corresponding to all possible combinations. As an example, there is now described a case in which there are 15 episodes corresponding to the respective 15 classes shown in FIG. 7. The number of episodes is not limited to 15, and may be any number. In this embodiment, there is described a case in which classes do not overlap between episodes, but there may be an overlap in classes between episodes.

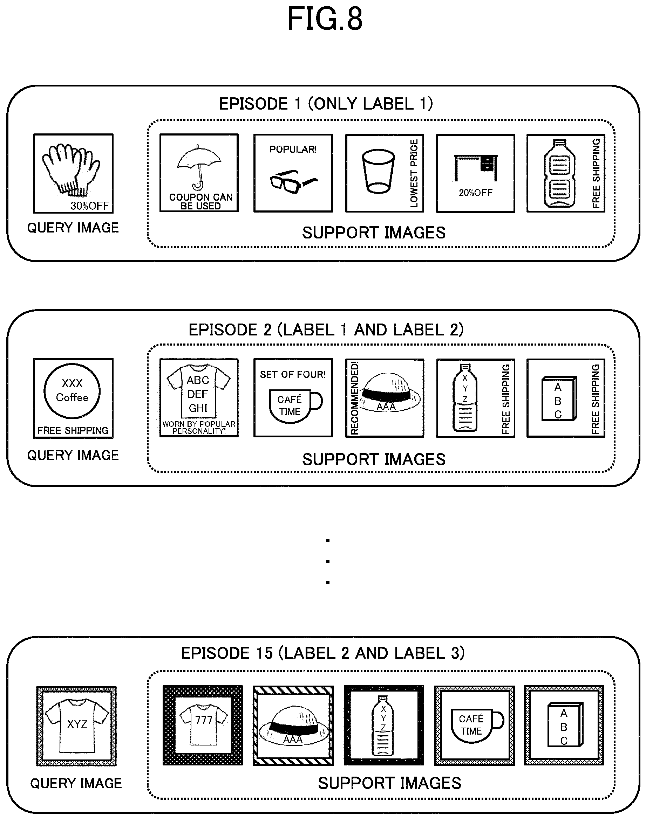

FIG. 8 is a diagram for illustrating an example of the query image $x_Q$ and support images $x_S$ included in individual episodes. As illustrated in FIG. 8, for each of episode 1 to episode 15, there is an image set of one query image $x_Q$ and five support images $x_S$. There may be two or more query images $x_Q$. Further, the number of query images $x_Q$ and the number of support images $x_S$ may be the same. That is, there also may be five query images $x_Q$ per episode.

For example, episode 1 is an episode for learning the images of the class (class having only label 1) having the highest total number of images in the distribution of FIG. 7. The data acquisition unit 301 randomly samples six images of this class (images having labels [0, 1, 0, 0, 0, 0, 0]) from among the data set DS. The data acquisition unit 301 uses one of the six images as the query image $x_Q$ and the remaining five as support images $x_S$.

Further, for example, episode 2 is an episode for learning the images of the class (class having label 1 and label 2) having the second highest total number of images. The data acquisition unit 301 randomly samples six images of this class (images having labels [0, 1, 1, 0, 0, 0, 0]) from among the data set DS. The data acquisition unit 301 uses one of the six images as the query image $x_Q$ and the remaining five as support images $x_S$.

Similarly for the other episode 3 to episode 15, for each episode, the data acquisition unit 301 randomly samples six images of the class corresponding to the episode and acquires those images as the query image $x_Q$ and sample images. That is, the data acquisition unit 301 acquires six images of the class corresponding to a certain episode as an image set of the query image $x_Q$ and the support images $x_S$ of the episode.

Further, when the value of N is 2 or more, each support image $x_S$ of a plurality of classes is included in one episode. In this case, only the query image $x_Q$ of any of the plurality of classes may be included in one episode, or a plurality of query images $x_Q$ corresponding to the plurality of classes may be included in one episode. Even when the value of N is 2 or more, the number of query images $x_Q$ is not limited to one.

The number of episodes may be specified by the user, or may be automatically determined from a statistical value in the image database DB or data set DS. For example, the user may specify the classes to be learned by the learning model M, and the episodes corresponding to that number may be set. Further, for example, classes having a total number of images in the image database DB or data set DS equal to or more than a threshold value may be automatically identified, and the episodes corresponding to that number may be set. The data acquisition unit 301 is only required to acquire the number of images corresponding to the episodes.

[First Calculation Unit]

The first calculation unit 302 calculates, when the multi-label query image $x_Q$ is input to the learning model M1, a first loss $L_{BCE}$ based on the output of the learning model M1 and a target output. That is, the first calculation unit 302 calculates the first loss $L_{BCE}$ based on the parameter of the learning model M1.

The output of the learning model M1 is the actual output obtained from the learning model M1. The target output is the content that the learning model M1 is supposed to output. In this embodiment, the label that is the correct answer stored in the data set DS corresponds to the target output.

The first loss $L_{BCE}$ shows an error (difference) between the output of the learning model M1 and the target output. The first loss $L_{BCE}$ is an index which can be used to measure the accuracy of the learning model M1. A high first loss $L_{BCE}$ means a large error and a low accuracy. A low first loss $L_{BCE}$ means a small error and a high accuracy. In this embodiment, there is described a case in which the first loss $L_{BCE}$ is a multi-label cross-entropy loss, but the first loss $L_{BCE}$ can be calculated by using any method. It is sufficient that the first loss $L_{BCE}$ can be calculated based on a predetermined loss function.

A set of the individual query images $x_Q$ included in a certain episode is hereinafter written as uppercase "$X_Q$". In this embodiment, the set $X_Q$ of query images $x_Q$ of a certain episode consists of one query image $x_Q$. In this embodiment, there is described a case in which N in N-way K-shot is 1, but there may be cases in which N is 2 or more. In those cases, the query image may thus be written as $x_Q^i$, in which "i" is a natural number equal to or less than N. Here, $i \in \{1, ..., N\}$, and $x_Q^i \in X_Q$.

As illustrated in FIG. 4, for example, the first calculation unit 302 inputs the query image $x_Q$ of a certain episode to the learning model M1. The learning model M1 is a model before parameter adjustment is performed by the adjustment unit 305 described later, and may be, for example, a learned model referred to as "ResNet 50." That is, the learning model M1 may be a model in which the features of general objects have been learned, rather than objects, for example, the digital text which is to be recognized in this embodiment.

For example, when the query image $x_Q$ is input to the learning model M1, an embedded function f(x) calculates $f(x_Q)$, which is an embedded vector of the query image $x_Q$. In f(x), "x" means any image. The embedded function f(x) may be a part of the program of the learning model M1, or may be an external program called by the learning model M1. The embedded vector is acquired by the feature amount acquisition unit 303 described later.

The first calculation unit 302 uses a sigmoid function "$\sigma(z) = 1/(1+e^{-z})$" to acquire a binary output of each class based on the embedded vector $f(x_Q)$. For example, the first calculation unit 302 calculates the first loss $L_{BCE}$ based on Expression 1 and Expression 2 below. Expression 1 and Expression 2 are examples of loss functions, but any function can be used as the loss function itself. When a loss other than a multi-label cross-entropy loss is to be used, a loss function corresponding to the loss can be used.

[Expression 1]

$$L_{BCE}\big(\sigma(z), y_Q\big) = \{l_1, \cdots, l_N\}^T$$

[Expression 2]

$$l_n = -y_Q^n \cdot \log \sigma(z) - \big(1 - y_Q^n\big) \log\big(1 - \sigma(z)\big)$$

The $y_Q^n$ of Expression 2 is the respective binary labels of the query images $x_Q$, and $y_Q^n \in y_Q$. Here, $y_Q$ is a combination of labels corresponding to each input. As the error between the actual output corresponding to the query image $x_Q$ and the target output of the query image $x_Q$ becomes smaller, the first loss $L_{BCE}$ becomes smaller, and as the error becomes larger, the first loss $L_{BCE}$ becomes larger.

The learning model M in this embodiment can recognize three or more labels, and for each combination of labels (i.e., for each episode), there is an image set which includes a query image $x_Q$ and support images $x_S$. There are three or more labels, and hence there are two or more label combinations.

The first calculation unit 302 calculates, for each combination of labels (that is, for each episode), the first loss $L_{BCE}$ based on the query image $x_Q$ corresponding to the combination. The method of calculating the first loss $L_{BCE}$ of the individual episodes is as described above. In this embodiment, there are 15 episodes, and therefore the first calculation unit 302 calculates the first loss $L_{BCE}$ corresponding to each of the 15 episodes.

The learning model M in this embodiment replaces the last layer of a model which has learned another label other than the plurality of labels to be recognized with a layer corresponding to the plurality of labels. The last layer is the output layer. For example, the last layer of the learning model M that has learned the shape of a general object by using ResNet 50 is replaced with a layer corresponding to the multi-labels (in this embodiment, a layer outputting seven values of from label 0 to label 6). As a result, the combination of the labels to be recognized by the learning model M is output. The first calculation unit 302 calculates the first loss $L_{BCE}$ based on the output of the learning model M having the replaced layer corresponding to the plurality of labels and the target output.

[Feature Amount Acquisition Unit]

The feature amount acquisition unit 303 acquires a feature amount of the query image $x_Q$ and a feature amount of each support image $x_S$ corresponding to the query image $x_Q$, which are calculated based on the parameter of the learning model M. The parameter is the current parameter of the learning model M. That is, the parameter is the parameter before adjustment by the adjustment unit 305 described later. When pre-learning is performed by using ResNet50, for example, the feature amounts are acquired based on the parameter after the pre-learning.

The feature amounts are information indicating a feature of the image. In this embodiment, there is described a case in which the embedded vector corresponds to the feature amount. For this reason, the term "embedded vector" in this embodiment can be read as "feature amount." The feature amounts can be expressed in any format, and are not limited to vector formats. The feature amounts may be expressed in another format, for example, an array format, a matrix format, or a single numerical value.

As illustrated in FIG. 4, in this embodiment, the learning models M1 and M2 are prepared. The feature amount acquisition unit 303 acquires the embedded vector of the query image $x_Q$ calculated based on the parameter of the learning model M1 and the embedded vector of each support image $x_S$ calculated based on the parameter of the learning model M2. When the query image $x_Q$ is input to the learning model M1, the feature amount acquisition unit 303 acquires the embedded vector of the query image $x_Q$ calculated by the learning model M1. When the support images $x_S$ are input to the learning model M2, the feature amount acquisition unit 303 acquires the embedded vector of each support image $x_S$ calculated by the learning model M2.

In this embodiment, there are a plurality of support images $x_S$ per episode, and therefore the feature amount acquisition unit 303 acquires the embedded vector of each of the plurality of support images $x_S$. Further, the value of K is 5 and there are five support images $x_S$ per episode, and hence the feature amount acquisition unit 303 inputs each of the five support images $x_S$ to the learning model M2 and acquires five embedded vectors. When the value of N is 2 or more, it is sufficient that the number of embedded vectors of the support images $x_S$ acquired by feature amount acquisition unit 303 correspond to the number of N.

The feature amount acquisition unit 303 acquires, for each combination of labels (that is, for each episode), the embedded vector of the query image $x_Q$ corresponding to the combination and the embedded vector of each support image $x_S$ corresponding to the combination. In this embodiment, there are 15 episodes, and therefore the feature amount acquisition unit 303 acquires the embedded vector of one query image $x_Q$ and the embedded vector of each of the five support images $x_S$ corresponding to each of the 15 episodes.

[Second Calculation Unit]

The second calculation unit 304 calculates a second loss $L_{CL}$ based on the embedded vector of the query image $x_Q$ and the embedded vector of each support image $x_S$.

The second loss $L_{CL}$ shows an error (difference) between the embedded vector of the query image $x_Q$ and the embedded vector of each support image $x_S$. The second loss $L_{CL}$ is an index which can be used to measure the accuracy of the learning models M1 and M2. A high second loss $L_{CL}$ means a large error and a low accuracy. A low second loss $L_{CL}$ means a small error and a high accuracy. In this embodiment, there is described a case in which the second loss $L_{CL}$ is a contrastive loss, but the second loss $L_{CL}$ can be calculated by using any method. It is sufficient that the second loss $L_{CL}$ can be calculated based on a predetermined loss function.

A contrastive loss is a loss used in contrastive learning. Contrastive learning is used to learn whether a pair of images is similar or not. For example, the Euclidean distance of a pair of embedded vectors in a pair of images {X1, X2} is used as a distance metric $D_W$.

For example, when a similarity label indicating the similarity of the image pair is $Y \in \{0, 1\}$, the contrastive loss is calculated based on Expression 3 below. When Y is 0, this means that an image $X_1$ and an image $X_2$ are similar (the image $X_1$ and the image $X_2$ have the same label). When Y is 1, this means that the image $X_1$ and the image $X_2$ are not similar (the image $X_1$ and the image $X_2$ have different labels). Expression 3 is an example of a loss function, but any function can be used as the loss function itself. In Expression 3, M is a constant for adjusting the loss generated when Y is 1.

[Expression 3]

$$L_{CL}(X_1, X_2, Y) = \frac{1}{2}\left\{(1 - Y)\big(D_w(X_1, X_2)\big)^2 + (Y)\big\{max\big(0, M - D_w(X_1, X_2)\big)\big\}^2\right\}$$

In order to apply contrastive learning like that described above to the method of this embodiment, in place of comparing the similarity between two images, two embedded vectors calculated from each of the support image $x_S$ and the query image $x_Q$ are input. In this embodiment, the support image $x_S$ and the query image $x_Q$ here have the same label, and therefore the similarity label Y is 0. For example, the second calculation unit 304 calculates the second loss $L_{CL}$ based on Expression 4 below. In Expression 4, the elements having a line drawn above "f($x_s$)" are the average value of the embedded vector of the support image $x_S$. Expression 4 is an example of a loss function, but any function can be used as the loss function itself.

[Expression 4]

$$L_{CL}\left(\overline{f(x_s)}, f(x_Q), 0\right) = \frac{1}{2} D_w\left(\overline{f(x_s)}, f(x_Q)\right)^2$$

The query image $x_Q$ and the support images $x_S$ have at least one label which is the same. There is described here a case in which the labels of all of those are the same, but the labels may be partial matches, and not exact matches. The second calculation unit 304 calculates the second loss $L_{CL}$ so that, as the difference between the embedded vector of the query image $x_Q$ and the embedded vector of the support image $x_S$ becomes larger, the second loss $L_{CL}$ becomes larger. The difference between the embedded vectors may be expressed by an index other than the distance. The relationship between the difference and the second loss $L_{CL}$ is defined in the loss function.

N is 2 or more and there are a plurality of support images $x_S$ per episode, and hence the second calculation unit 304 calculates an average feature amount (in Expression 4, the elements having a line drawn above "f ($x_s$)") based on the embedded vector of each of the plurality of support images $x_S$, and acquires the second loss $L_{CL}$ based on the embedded vector of the query image $x_Q$ and the average embedded vector. The average embedded vector may be weighted in some manner in place of being a simple average of the five support images $x_S$. When the value of N is 2 or more, an average feature amount extending across classes may be calculated.

The second calculation unit 304 calculates, for each combination of labels (that is, for each episode), the second loss $L_{CL}$ based on the embedded vector of the query image $x_Q$ corresponding to the combination and the embedded vector of each support image $x_S$ corresponding to the combination. In this embodiment, there are 15 episodes, and therefore the second calculation unit 304 calculates the second loss $L_{CL}$ based on the embedded vector of one query image $x_Q$ and the embedded vector of each of the five support images $x_S$ corresponding to each of the 15 episodes.

[Adjustment Unit]

The adjustment unit 305 adjusts the parameter of the learning model M based on the first loss $L_{BCE}$ and the second loss $L_{CL}$. Adjusting the parameter has the same meaning as executing learning by the learning model M. As the method itself of adjusting the parameter based on losses, various methods can be used. For example, an inverse error propagation method or a gradient descent method may be used. The adjustment unit 305 adjusts the parameter of the learning model M so that the first loss $L_{BCE}$ and the second loss $L_{CL}$ each become smaller.

When the parameter of the learning model M is adjusted so that the first loss $L_{BCE}$ becomes smaller, the error between the output of the learning model M and the label that is the correct answer is reduced. That is, the probability that the learning model M outputs the correct answer increases. In other words, the output of the learning model M becomes closer to the label that is the correct answer.

When the parameter of the learning model M is adjusted such that the second loss $L_{CL}$ becomes smaller, the learning model M calculates the embedded vectors such that the difference between the embedded vector of the query image $x_Q$ and the embedded vector of the support image $x_S$ similar to the query image $x_Q$ is reduced.

Contrary to this embodiment, in a case in which a support image $x_S$ not similar to the query image $x_Q$ is used, when the parameter of the learning model M is adjusted so that the second loss $L_{CL}$ becomes smaller, the learning model M calculates embedded vectors so that the difference between the embedded vector of the query image $x_Q$ and the embedded vector of the support image $x_S$ not similar to the query image $x_Q$ becomes larger.

In this embodiment, the adjustment unit 305 calculates a total loss $L_{total}$ based on the first loss $L_{BCE}$ and the second loss $L_{CL}$, and adjusts the parameter of the learning model M based on the total loss $L_{total}$. The total loss $L_{total}$ is calculated based on Expression 5 below. Expression 5 is an example of a loss function, but any function can be used as the loss function itself. For example, in place of a simple average as in Expression 5, the total loss $L_{total}$ may be calculated based on a weighted average using a weighting coefficient.

[Expression 5]

$$L_{total} = L_{CL} + L_{BCE}$$

In this embodiment, the learning model M1 and the learning model M2 exist, and the parameter is shared between the learning model M1 and the learning model M2. For this reason, the adjustment unit 305 adjusts the parameter of the learning model M1 and the parameter of the learning model M2. In this embodiment, the adjustment unit 305 adjusts the parameter of the learning model M1 by using the total loss $L_{total}$, and copies the adjusted parameter of the learning model M1 to the learning model M2.

Contrary to the case described above, the adjustment unit 305 may adjust the parameter of the learning model M2 by using the total loss $L_{total}$, and copy the adjusted parameter of the learning model M2 to the learning model M1. Further, in place of copying the parameter, the adjustment unit 305 may adjust the parameter of the learning model M1 by using the total loss $L_{total}$, and adjust the parameter of the learning model M2 by using the same total loss $L_{total}$. As a result of this method, the parameter is shared as well.

In this embodiment, the adjustment unit 305 adjusts the parameter of the learning model M based on the first loss $L_{BCE}$ and the second loss $L_{CL}$ calculated for each combination of labels (that is, for each episode). In this embodiment, there are 15 episodes, and therefore the adjustment unit 305 adjusts the parameter of the learning model M based on 15 loss pairs (a pair of first loss $L_{BCE}$ and second loss $L_{CL}$) corresponding to the respective 15 episodes.

For example, the adjustment unit 305 calculates 15 total losses $L_{total}$ corresponding to the respective 15 episodes. The adjustment unit 305 adjusts the parameter of the learning model M for each of the 15 total losses $L_{total}$ by using the inverse error propagation method, for example. The adjustment unit 305 may adjust the parameter of the learning model M by combining all or a part of the 15 total losses $L_{total}$ into one loss.

The adjustment unit 305 may adjust the parameter of the learning model M without calculating the total loss $L_{total}$. For example, the adjustment unit 305 may adjust the parameter of the learning model M so that the first loss $L_{BCE}$ becomes smaller, and then adjust the parameter of the learning model M so that the second loss $L_{CL}$ becomes smaller. As another example, the adjustment unit 305 may adjust the parameter of the learning model M so that the second loss $L_{CL}$ becomes smaller, and then adjust the parameter of the learning model M so that the first loss $L_{BCE}$ becomes smaller.

The adjustment unit 305 may also combine the first loss $L_{BCE}$ for a certain episode with the first loss $L_{BCE}$ for another episode into one loss, and then adjust the parameter of the learning model M. The adjustment unit 305 may also combine the second loss $L_{CL}$ for a certain episode with the second loss $L_{CL}$ for another episode into one loss, and then adjust the parameter of the learning model M.

[4. Processing to be executed in Learning System]

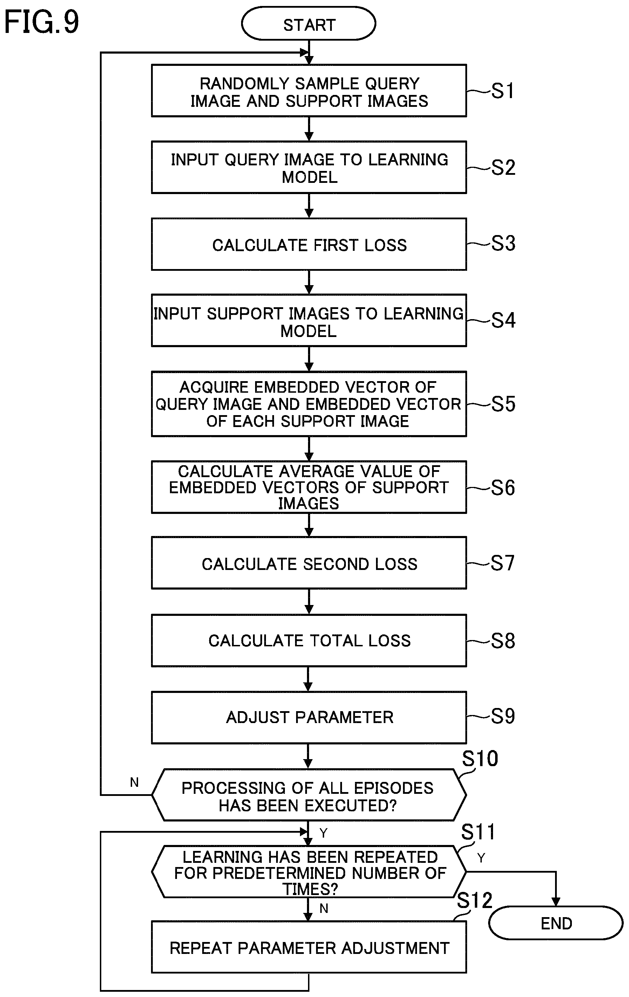

FIG. 9 is a flow chart for illustrating an example of processing to be executed in the learning system S. In this embodiment, the learning terminal 30 executes the learning by the learning model M, and therefore, in FIG. 9, an example of processing executed in the learning terminal 30 is illustrated. The processing is executed by the control unit 31 operating in accordance with a program stored in the storage unit 32. The processing is an example of processing to be executed by the function blocks illustrated in FIG. 3.

The data set DS is stored in advance in the storage unit 32. Further, the order of the episodes to be processed and the classes corresponding to the individual episodes are specified in advance. For example, the episodes corresponding to each of the 15 classes in the long-tail distribution shown in FIG. 7 are specified as the episodes to be processed in descending order of the total number of images (in the case of the example of FIG. 7, in order from the classes having only label 1 to classes having labels 2 and 3).

As illustrated in FIG. 9, the learning terminal 30 randomly samples one query image $x_Q$ and five support images $x_S$ of the episode to be processed from the data set DS (Step S1). The learning terminal 30 inputs the query image $x_Q$ of the episode to be processed to the learning model M1 (Step S2). The learning terminal 30 calculates, based on the data set DS, the first loss $L_{BCE}$ of the query image $x_Q$ based on the actual output of the learning model M1 and the label that is the correct answer of the query image $x_Q$ (Step S3).

The learning terminal 30 inputs each of the five support images $x_S$ of the episode to be processed to the learning model M2 (Step S4). The learning terminal 30 acquires the embedded vector of the query image $x_Q$ calculated by the learning model M1 and the embedded vector of each of the five support images $x_S$ calculated by the learning model M2 (Step S5). The learning terminal 30 calculates the average value of the embedded vectors of the five support images $x_S$ (Step S6).

The learning terminal 30 calculates the second loss $L_{CL}$ based on the embedded vector of the query image $x_Q$ and the average value calculated in Step S6 (Step S7). The learning terminal 30 calculates the total loss $L_{total}$ based on the first loss $L_{BCE}$ and the second loss $L_{CL}$ (Step S8). The learning terminal 30 adjusts the parameter of each of the learning model M1 and the learning model M2 based on the total loss $L_{total}$ (Step S9).

The learning terminal 30 determines whether or not all episodes have been processed (Step S10). When there is an episode that has not yet been processed (Step S10: N), the process returns to Step S1, and the next episode is processed. When it is determined that processing has been executed for all episodes (Step S10: Y), the learning terminal 30 determines whether or not the learning has been repeated a predetermined number of times (Step S11). This number is referred to as "epoch".

When it is not determined that the learning has been repeated the predetermined number of times (Step S11: N), the learning terminal 30 repeats the adjustment of the parameter of each of the learning model M1 and the learning model M2 (Step S12). In Step S12, the processing from Step S1 to Step S9 is repeated for each of the 15 episodes. Meanwhile, when it is determined that the learning has been repeated the predetermined number of times (Step S11: Y), the processing is ended.

According to the learning system S of this embodiment, by adjusting the parameter of the learning model M based on the first loss $L_{BCE}$ and the second loss $L_{CL}$, the accuracy of the learning model M which is capable of recognizing multi-label data can be increased by using less training data. For example, when an attempt is made to adjust the parameter of the learning model M by using only the first loss $L_{BCE}$, which is a multi-label cross-entropy loss, it is required to prepare an extremely large amount of training data. Further, for example, when an attempt is made to adjust the parameter of the learning model M by using only the second loss $L_{CL}$, which is a few-shot learning-based contrastive loss, it is possible to reduce the amount of training data, but due to the above-mentioned first problem and second problem and the like, the accuracy of the learning model M capable of handling multi-labels may not be sufficiently increased. Through use of the first loss $L_{BCE}$ and the second loss $L_{CL}$ together, a reduction in training data and an improvement in the accuracy of the learning model M can both be achieved. According to the inventors' own research, it has been confirmed that the labeling accuracy of labels having a relatively small total number of images in a long-tail distribution (labels 0, 4, 5, and 6 of FIG. 6) is particularly improved. In addition, by achieving a reduction in training data, the time and effort expended by the user when the learning model M is created can be reduced.

Moreover, the learning system S can cause the learning model M to learn the features of images which are similar to each other by calculating the second loss $L_{CL}$ so that the second loss $L_{CL}$ becomes larger as the difference between the embedded vector of the query image $x_Q$ and the embedded vector of the support image $x_S$ having at least one label which is the same becomes larger. For example, the accuracy of the learning model M can be increased by adjusting the parameter of the learning model M so that the embedded vector of the query image $x_Q$ becomes closer to the embedded vectors of the support images $x_S$.

Further, the learning system S can increase the number of the support images $x_S$ and effectively increase the accuracy of the learning model M by acquiring the second loss $L_{CL}$ based on the embedded vector of the query image $x_Q$ and an average value of the embedded vector of each of a plurality of support images $x_S$. That is, the second loss $L_{CL}$ can be accurately calculated even when the number of support images $x_S$ is increased. Moreover, one second loss $L_{CL}$ may be calculated by combining the embedded vectors of a plurality of support images $x_S$ into a single average value. As a result, it is not required to calculate a large number of second losses $L_{CL}$, and therefore the processing load on the learning terminal 30 can be reduced, and the learning can be accelerated.

Further, the learning system S can effectively increase the accuracy of the learning model M by using one index which comprehensively considers the first loss $L_{BCE}$ and the second loss $L_{CL}$ by calculating a total loss $L_{total}$ and adjusting the parameter based on the first loss $L_{BCE}$ and the second loss $L_{CL}$. Moreover, the processing required during learning can be simplified by combining the first loss $L_{BCE}$ and the second loss $L_{CL}$ into one total loss $L_{total}$. That is, by combining two losses into one, the learning processing can also be combined into one. As a result, the processing load on the learning terminal 30 can be reduced, and the learning can be accelerated.

Further, the learning system S has an image set which includes the query image $x_Q$ and support images $x_S$ for each combination of labels (that is, for each episode). Through adjustment of the parameter of the learning model M based on the first loss $L_{BCE}$ and the second loss $L_{CL}$ calculated for each label combination, the features of various label combinations can be learned by the learning model M, and the accuracy of the learning model M can be increased. Moreover, even when there are many label combinations for multi-labels, it is possible to create a learning model M capable of recognizing those combinations.

Further, the learning system S can execute the calculation of the embedded vectors in parallel and accelerate the learning processing by inputting the query image $x_Q$ to the learning model M1 and inputting the support images $x_S$ to the learning model M2.

Further, even when the population to be processed by the learning model M has a long-tail distribution, the learning system S can reduce training data and maximize the accuracy of the learning model M by acquiring the query image $x_Q$ and the support images $x_S$ from a data group having a long-tail distribution for multi-labels. For example, in learning performed by using classes having a large total number of images and classes having a small total number of images, by making the number of images to be used in the learning (the number of images included per episode) to be the same, the features of all the classes can be learned universally by the learning model M.

The learning system S can prepare a learning model M having a certain degree of accuracy at the beginning of learning and can also increase the accuracy of the ultimately obtained learning model M by replacing the last layer of a model which has learned another label other than the plurality of labels to be recognized with a layer corresponding to the plurality of labels. For example, when pre-learning is executed by using a general ResNet 50, the learning model M obtained by the pre-learning can recognize the features of a general object to a certain degree. That is, this learning model M can recognize to a certain degree what part of the image to focus on so that the object can be classified. Through use of such a learning model M to perform learning like that in this embodiment, a higher accuracy learning model M can be obtained. Further, the number of times for which learning is required to be executed in order to obtain a learning model M having a certain degree of accuracy can be reduced, and the processing load on the learning terminal 30 can be reduced. Further, the learning can be accelerated.

Further, the learning system S can enhance the accuracy of the learning model M capable of recognizing multi-label images through use of a small amount of training data by using the data to be processed by the learning model M as an image.

[5. Modification Examples]

The present disclosure is not limited to the embodiment described above, and can be modified suitably without departing from the scope of the attached set of claims.

(1) For example, the adjustment unit 305 may calculate the total loss $L_{total}$ based on the first loss $L_{BCE}$, the second loss $L_{CL}$, and a weighting coefficient specified by the user. The user can specify at least one weighting coefficient for the first loss $L_{BCE}$ and the second loss $L_{CL}$. The user may specify weighting coefficients for both of the first loss $L_{BCE}$ and the second loss $L_{CL}$, or for only one of the first loss $L_{BCE}$ and the second loss $L_{CL}$. The weighting coefficients specified by the user are stored in the data storage unit 300. The adjustment unit 305 acquires, as the total loss $L_{total}$, a value obtained by multiplying each of the first loss $L_{BCE}$ and the second loss $L_{CL}$ by the weighting coefficient, and adding the products. The processing of the adjustment unit 305 after the total loss $L_{total}$ is acquired is the same as in the embodiment.

According to Modification Example (1) of the present disclosure, the accuracy of the learning model M can be effectively increased by calculating the total loss $L_{total}$ based on the first loss $L_{BCE}$, the second loss $L_{CL}$, and the weighting coefficient specified by the creator. For example, the weighting coefficient can be used depending on the objective of the user by, for example, increasing the weighting coefficient of the first loss $L_{BCE}$ when a major class in a long-tail distribution is to be preferentially learned, and increasing the weighting coefficient of the second loss $L_{CL}$ when a minor class in a long-tail distribution is to be preferentially learned.

(2) Further, for example, the second calculation unit 304 may acquire the second loss $L_{CL}$ based on the embedded vector of the query image $x_Q$, the embedded vector of each support image $x_S$, and a coefficient corresponding to a label similarity between the query image $x_Q$ and each support image $x_S$. The label similarity is the number or proportion of the same label. When the number or proportion of the same label is larger or higher, this means that the label similarity is higher.

In the embodiment, there is described a case in which the labels of the query image $x_Q$ and the labels of the support image $x_S$ completely match (case in which the class of the query image $x_Q$ and the class of the support image $x_S$ are the same), but in this modification example, there is described a case in which the label of the query image $x_Q$ and the label of the support image $x_S$ partially match and do not completely match (case in which the class of the query image $x_Q$ is similar to the class of the support image $x_S$).

For example, when the query image $x_Q$ is a multi-label image belonging to the three labels of label 1, label 2, and label 4, and the support image $x_S$ is a multi-label image belonging to the three labels of label 1, label 3, and label 4, two of the three labels match between the query image $x_Q$ and the support image $x_S$. The coefficient corresponding to the similarity is thus 0.67. The second calculation unit 304 calculates the second loss $L_{CL}$ by multiplying this coefficient by Expression 4.

When the number or proportion of the same label between the query image $x_Q$ and the support image $x_S$ becomes larger or higher, the coefficient becomes larger. The relationship between the number or proportion of the labels and the coefficient may be determined in advance in an expression or the data of a table, for example. When the second calculation unit 304 calculates the second loss $L_{CL}$ in an episode, the second calculation unit 304 identifies the number or proportion of the same label between the query image $x_Q$ and the support image $x_S$ of the episode, and acquires the coefficient corresponding to the number or proportion. The second calculation unit 304 calculates the second loss $L_{CL}$ based on the coefficient.

According to Modification Example (2) of the present disclosure, the accuracy of the learning model M can be effectively increased through use of less training data by acquiring a second loss $L_{CL}$ based on a coefficient corresponding to a label similarity between the query image $x_Q$ and the support image $x_S$. For example, there are cases in which it is difficult to find another image having exactly the same labels as that of a certain image, but it is easy to obtain an image having similar labels. In this case, by acquiring the second loss $L_{CL}$ based on a coefficient corresponding to the label similarity, it is not required to obtain another image having the exact same labels, and the time and effort expended by the user can be reduced.

(3) Further, for example, the modification examples described above may be combined.

For example, parameter adjustment may be executed without calculating the average value of the embedded vector of each of the plurality of support images $x_S$. In this case, the adjustment unit 305 may execute parameter adjustment by calculating, for each support image $x_S$, a total loss $L_{total}$ based on the first loss $L_{BCE}$ of the query image $x_Q$ and the second loss $L_{CL}$ of the support image $x_S$.

Further, for example, in FIG. 4, two learning models M1 and M2 are illustrated, but the learning model M may be only one learning model. In this case, the query image $x_Q$ and each support image $x_S$ are input to one learning model M. As another example, the learning model M may be three or more learning models. In this case, a learning model M may be prepared for each of N support images $x_S$. When the number of learning models M is three or more, the parameter is also shared in such a case.

Further, for example, there has been described a case in which the parameter of the learning model M is adjusted based on the first loss $L_{BCE}$ and the second loss $L_{CL}$, but the learning system S may adjust the parameter of the learning model M based only on the second loss $L_{CL}$ without calculating the first loss $L_{BCE}$. Conversely, the learning system S may adjust the parameter of the learning model M based only on the first loss $L_{BCE}$ without calculating the second loss $L_{CL}$. This is because even when the learning system S is configured in such a way, it is possible to create a learning model M having a certain degree of accuracy.

Further, for example, the object to be recognized by the learning model M may be any object included in the image, and is not limited to a digital text, for example. For example, the learning model M may recognize a multi-label image in which a plurality of objects such as a dog or a cat appear. That is, the labels labeled by the learning model M are not limited to digital text or the like, and may be a subject in the image. It is sufficient that the label be some kind of classification of an object in the image.

Further, for example, the data input to the learning model M is not limited to images. That is, the learning system S is also applicable to a learning model M which performs recognition other than image recognition. For example, the learning system S may also be applicable to a learning model M for performing speech recognition. In this case, the data input to the learning model M is voice data. As another example, the learning system S is also applicable to a learning model M in natural language processing. In this case, the data input to the learning model M is document data. As still another example, the learning system S is also applicable to a learning model M which recognizes various human behaviors or phenomena in the natural world, for example. The data input to the learning model M may be data corresponding to the application of the learning model M.

Further, for example, all or part of the functions included in the learning terminal 30 may be implemented on another computer. For example, each of the data acquisition unit 301, the first calculation unit 302, the feature amount acquisition unit 303, the second calculation unit 304, and the adjustment unit 305 may be included in the server 10. In this case, each of those functions is implemented mainly by the control unit 11. Further, for example, each of those functions may be shared by a plurality of computers. The learning system S may include only one computer. Further, for example, the data described as being stored in the data storage units 100 and 300 may be stored in another computer or information storage medium different from the server 10 or the learning terminal 30.

**Claims**

1. A learning system, comprising:

   means for carrying-out a learning model M configured to recognize objects included in a multi-label query image, wherein the query image is an image of a new class that has not been learned by the learning model M, the output of the learning model includes values indicating whether or not the image belongs to each of the multiple labels, and wherein, for each multi-label query image, K support images are randomly sampled from a labelled dataset DS such that each support image shares at least one label with the multi-label query image;
   first calculation means configured to calculate, when multi-label query image is input to the learning model, a first loss based on the output of the learning model and a target output;
   feature amount acquisition means configured to acquire a feature amount of the multi-label query image and a feature amount of one of the k support images corresponding to the multi-label query image, which are calculated based on a parameter of the learning model, wherein the respective feature amounts are information indicating a feature of the image and the labels of query image and the support image are partial matches;
   second calculation means configured to calculate a second loss based on the feature amount of the multi-label query image and the feature amount of the support image; and
   adjustment means configured to adjust the parameter based on the first loss and the second loss.

2. The learning system according to claim 1,
   wherein the second calculation means is configured to calculate the second loss so that, as a difference between the feature amount of the multi-label query image and the feature amount of the support image becomes larger, the second loss becomes larger.

3. The learning system according to claim 1 or 2,

   wherein the feature amount acquisition means is configured to acquire a feature amount of each of a plurality of pieces of the support image, and
   wherein the second calculation means is configured to calculate an average feature amount based on the feature amount of each of the plurality of pieces of the support image, and to acquire the second loss based on the feature amount of the multi-label query image and the average feature amount.

4. The learning system according to any one of claims 1 to 3, wherein the adjustment means is configured to calculate a total loss based on the first loss and the second loss, and to adjust the parameter based on the total loss.

5. The learning system according to claim 4, wherein the adjustment means is configured to calculate the total loss based on the first loss, the second loss, and a weighting coefficient specified by a creator.

6. The learning system according to any one of claims 1 to 5,

   wherein the learning model is configured to recognize three or more labels,
   wherein, for each combination of the three or more labels, there is an image set which includes the multi-label query image and the support image,
   wherein the first calculation means is configured to calculate, for each combination of the three or more labels, the first loss based on the multi-label query image corresponding to the combination,
   wherein the feature amount acquisition means is configured to acquire, for each combination of the three or more labels, the feature amount of the multi-label query image corresponding to the combination and the feature amount of the support image corresponding to the combination,
   wherein the second calculation means is configured to calculate, for each combination of the three or more labels, the second loss based on the feature amount of the multi-label query image corresponding to the combination and the feature amount of the support image corresponding to the combination, and
wherein the adjustment means is configured to adjust the parameter based on the first loss and the second loss which are calculated for each combination of the three or more labels.

7. The learning system according to any one of claims 1 to 6,

wherein the multi-label query image is input to a first learning model,
wherein the support image is input to a second learning model,
wherein the parameter of the first learning model and the parameter of the second learning model are shared,
wherein the first calculation means is configured to calculate the first loss based on the parameter of the first learning model,
wherein the feature amount acquisition means is configured to acquire the feature amount of the multi-label query image calculated based on the parameter of the first learning model and the feature amount of the support image calculated based on the parameter of the second learning model, and
wherein the adjustment means is configured to adjust each of the parameter of the first learning model and the parameter of the second learning model.

8. The learning system according to any one of claims 1 to 7,
wherein the second calculation means is configured to acquire the second loss based on the feature amount of the multi-label query image, the feature amount of the support image, and a coefficient corresponding to a label similarity between the multi-label query image and the support image.

9. The learning system according to any one of claims 1 to 8, further comprising data acquisition means configured to acquire the multi-label query image and the support image from a data group having a long-tail distribution for multi-labels.

10. The learning system according to any one of claims 1 to 9,

wherein the learning model is configured such that a last layer of a model which has learned another label other than a plurality of labels to be recognized is replaced with a layer corresponding to the plurality of labels, and
wherein the first calculation means is configured to calculate the first loss based on the output of the learning model in which the last layer is replaced with the layer corresponding to the plurality of labels, and based on the target output.

11. A computer-implemented method, comprising:

a learning model M recognizing objects included in a multi-label query image, wherein the query image is an image of a new class that has not been learned by the learning model M, the output of the learning model includes values indicating whether or not the image belongs to each of the multiple labels, and wherein, for each multi-label query image, K support images are randomly sampled from a labelled dataset DS such that each support image shares at least one label with the multi-label query image;
a first calculation step of calculating, when multi-label query image is input to the learning model, a first loss based on the output of the learning model and a target output;
a feature amount acquisition step of acquiring a feature amount of the multi-label query image and a feature amount of one of the k support images corresponding to the multi-label query image, which are calculated based on a parameter of the learning model, wherein the respective feature amounts are information indicating a feature of the image and the labels of query image and the support image are partial matches;
a second calculation step of calculating a second loss based on the feature amount of the multi-label query image and the feature amount of the support image; and
an adjustment step of adjusting the parameter based on the first loss and the second loss.

12. A program comprising instructions which, when executed by a computer, cause the computer to function as:

means for carrying-out a learning model M configured to recognize objects included in a multi-label query image, wherein the query image is an image of a new class that has not been learned by the learning model M, the output of the learning model includes values indicating whether or not the image belongs to each of the multiple labels, and wherein, for each multi-label query image, K support images are randomly sampled from a labelled dataset DS such that each support image shares at least one label with the multi-label query image;

first calculation means configured to calculate, when multi-label query image is input to the learning model, a first loss based on the output of the learning model and a target output;

feature amount acquisition means configured to acquire a feature amount of the multi-label query image and a feature amount of one of the k support images corresponding to the multi-label query image, which are calculated based on a parameter of the learning model, wherein the respective feature amounts are information indicating a feature of the image and the labels of query image and the support image are partial matches;

second calculation means configured to calculate a second loss based on the feature amount of the multi-label query image and the feature amount of the support image; and

adjustment means configured to adjust the parameter based on the first loss and the second loss.

**Patentansprüche**

1. Lernsystem, umfassend:

   ein Mittel zum Ausführen eines Lernmodells M, das dazu konfiguriert ist, Objekte zu erkennen, die in einem Multi-Label-Abfragebild enthalten sind, wobei das Abfragebild ein Bild einer neuen Klasse ist, die von dem Lernmodell M nicht gelernt worden ist, die Ausgabe des Lernmodells Werte einschließt, die anzeigen, ob das Bild zu jedem der mehreren Labels gehört oder nicht, und wobei für jedes Multi-Label-Abfragebild K Support-Bilder zufällig aus einem beschrifteten Datensatz DS entnommen werden, so dass jedes Support-Bild mindestens ein Label mit dem Multi-Label-Abfragebild gemeinsam hat;

   ein erstes Berechnungsmittel, das dazu ausgebildet ist, wenn ein Multi-Label-Abfragebild in das Lernmodell eingegeben wird, einen ersten Verlust, basierend auf der Ausgabe des Lernmodells und einer Zielausgabe, zu berechnen;

   ein Merkmalsgrößenerfassungsmittel, das dazu konfiguriert ist, eine Merkmalsgröße des Multi-Label-Abfragebildes und eine Merkmalsgröße eines der k Support-Bilder, die dem Multi-Label-Abfragebild entsprechen, zu erfassen, wobei die Merkmalsgrößen, basierend auf einem Parameter des Lernmodells, berechnet werden, wobei die jeweiligen Merkmalsgrößen Informationen sind, die ein Merkmal des Bildes anzeigen, und die Labels des Abfragebildes und des Support-Bildes teilweise Übereinstimmungen aufweisen;

   ein zweites Berechnungsmittel, das dazu ausgebildet ist, einen zweiten Verlust, basierend auf der Merkmalsgröße des Multi-Label-Abfragebildes und der Merkmalsgröße des Support-Bildes, zu berechnen; und ein Anpassungsmittel, das dazu ausgebildet ist, den Parameter, basierend auf dem ersten Verlust und dem zweiten Verlust, anzupassen.

2. Lernsystem nach Anspruch 1,
   wobei das zweite Berechnungsmittel dazu konfiguriert ist, den zweiten Verlust so zu berechnen, dass, wenn ein Unterschied zwischen der Merkmalsgröße des Multi-Label-Abfragebildes und der Merkmalsgröße des Support-Bildes größer wird, der zweite Verlust größer wird.

3. Lernsystem nach Anspruch 1 oder 2,

   wobei das Merkmalsgrößenerfassungsmittel dazu konfiguriert ist, eine Merkmalsgröße jedes der Vielzahl von Teilen des Support-Bildes zu erfassen, und
   wobei das zweite Berechnungsmittel dazu konfiguriert ist, eine durchschnittliche Merkmalsgröße, basierend auf der Merkmalsgröße von jedem von der Vielzahl von Teilen des Support-Bildes, zu berechnen und den zweiten Verlust, basierend auf der Merkmalsgröße des Multi-Label-Abfragebildes und der durchschnittlichen Merkmalsgröße, zu erfassen.

4. Lernsystem nach einem der Ansprüche 1 bis 3, wobei das Anpassungsmittel dazu konfiguriert ist, einen Gesamtverlust, basierend auf dem ersten Verlust und dem zweiten Verlust, zu berechnen und den Parameter, basierend auf dem Gesamtverlust, anzupassen.

5. Lernsystem nach Anspruch 4, wobei das Anpassungsmittel dazu konfiguriert ist, den Gesamtverlust, basierend auf dem ersten Verlust, dem zweiten Verlust und einem von einem Ersteller spezifizierten Gewichtungskoeffizienten, zu berechnen.

6. Lernsystem nach einem der Ansprüche 1 bis 5,

wobei das Lernmodell dazu konfiguriert ist, drei oder mehr Labels zu erkennen,

wobei für jede Kombination der drei oder mehr Labels ein Bildsatz vorhanden ist, der das Multi-Label-Abfragebild und das Support-Bild einschließt,

wobei das erste Berechnungsmittel dazu konfiguriert ist, für jede Kombination der drei oder mehr Labels den ersten Verlust, basierend auf dem der Kombination entsprechenden Multi-Label-Abfragebild, zu berechnen,

wobei das Merkmalsgrößenerfassungsmittel dazu konfiguriert ist, für jede Kombination der drei oder mehr Labels die Merkmalsgröße des der Kombination entsprechenden Multi-Label-Abfragebildes und die Merkmalsgröße des der Kombination entsprechenden Support-Bildes zu erfassen,

wobei das zweite Berechnungsmittel dazu konfiguriert ist, für jede Kombination der drei oder mehr Labels den zweiten Verlust, basierend auf der Merkmalsgröße des der Kombination entsprechenden Multi-Label-Abfragebildes und der Merkmalsgröße des der Kombination entsprechenden Support-Bildes, zu berechnen, und

wobei das Anpassungsmittel dazu konfiguriert ist, den Parameter, basierend auf dem ersten Verlust und dem zweiten Verlust, anzupassen, die für jede Kombination der drei oder mehr Labels berechnet werden.

7. Lernsystem nach einem der Ansprüche 1 bis 6,

wobei das Multi-Label-Abfragebild in ein erstes Lernmodell eingegeben wird,

wobei das Support-Bild in ein zweites Lernmodell eingegeben wird,

wobei der Parameter des ersten Lernmodells und der Parameter des zweiten Lernmodells gemeinsam genutzt werden,

wobei das erste Berechnungsmittel dazu konfiguriert ist, den ersten Verlust, basierend auf dem Parameter des ersten Lernmodells, zu berechnen,

wobei das Merkmalsgrößenerfassungsmittel dazu konfiguriert ist, die Merkmalsgröße des Multi-Label-Abfragebildes, die, basierend auf dem Parameter des ersten Lernmodells, berechnet wird, und die Merkmalsgröße des Support-Bildes, die, basierend auf dem Parameter des zweiten Lernmodells, berechnet wird, zu erfassen, und

wobei das Anpassungsmittel dazu konfiguriert ist, sowohl den Parameter des ersten Lernmodells als auch den Parameter des zweiten Lernmodells anzupassen.

8. Lernsystem nach einem der Ansprüche 1 bis 7,
wobei das zweite Berechnungsmittel dazu konfiguriert ist, den zweiten Verlust, basierend auf der Merkmalsgröße des Multi-Label-Abfragebildes, der Merkmalsgröße des Support-Bildes und einem einer Label-Ähnlichkeit zwischen dem Multi-Label-Abfragebild und dem Support-Bild entsprechenden Koeffizienten, zu erfassen.

9. Lernsystem nach einem der Ansprüche 1 bis 8, das weitere Datenerfassungsmittel umfasst, das dazu konfiguriert ist, das Multi-Label-Abfragebild und das Support-Bild aus einer Datengruppe zu erfassen, die eine Long-Tail-Verteilung für Multi-Labels aufweist.

10. Lernsystem nach einem der Ansprüche 1 bis 9,

wobei das Lernmodell derart konfiguriert ist, dass eine letzte Schicht eines Modells, das ein anderes Label als eine Vielzahl von zu erkennenden Labels gelernt hat, durch eine der Mehrzahl von Labels entsprechende Schicht ersetzt wird, und

wobei das erste Berechnungsmittel dazu konfiguriert ist, den ersten Verlust, basierend auf der Ausgabe des Lernmodells, in dem die letzte Schicht durch eine der Mehrzahl von Labels entsprechende Schicht ersetzt ist, und basierend auf der Zielausgabe, zu berechnen.

11. Computerimplementiertes Verfahren, umfassend:

ein Lernmodell M, das Objekte erkennt, die in einem Multi-Label-Abfragebild enthalten sind, wobei das Abfragebild ein Bild einer neuen Klasse ist, die von dem Lernmodell M nicht gelernt worden ist, und wobei die Ausgabe des Lernmodells Werte einschließt, die anzeigen, ob das Bild zu jedem der mehreren Labels gehört oder nicht, und wobei für jedes Multi-Label-Abfragebild K Support-Bilder zufällig aus einem beschrifteten Datensatz DS entnommen werden, so dass jedes Support-Bild mindestens ein Label mit dem Multi-Label-Abfragebild gemeinsam hat;

einen ersten Berechnungsschritt des Berechnens, wenn ein Multi-Label-Abfragebild in das Lernmodell eingegeben wird, eines ersten Verlusts, basierend auf der Ausgabe des Lernmodells und einer Zielausgabe;

einen Merkmalsgrößenerfassungsschritt des Erfassens einer Merkmalsgröße des Multi-Label-Abfragebildes und einer Merkmalsgröße eines der k Support-Bilder, die dem Multi-Label-Abfragebild entsprechen, wobei die Merkmalsgrößen, basierend auf einem Parameter des Lernmodells, berechnet werden, wobei die jeweiligen Merkmalsgrößen Informationen sind, die ein Merkmal des Bildes anzeigen, und wobei die Labels des Abfragebildes und des Support-Bildes teilweise Übereinstimmungen aufweisen;

einen zweiten Berechnungsschritt des Berechnens eines zweiten Verlusts, basierend auf der Merkmalsgröße des Multi-Label-Abfragebildes und der Merkmalsgröße des Support-Bildes; und

einen Anpassungsschritt des Anpassens des Parameters, basierend auf dem ersten Verlust und dem zweiten Verlust.

12. Programm, umfassend Anweisungen, die, wenn sie von einem Computer ausgeführt werden, den Computer dazu veranlassen, zu fungieren als:

Mittel zum Ausführen eines Lernmodells M, das dazu konfiguriert ist, Objekte zu erkennen, die in einem Multi-Label-Abfragebild enthalten sind, wobei das Abfragebild ein Bild einer neuen Klasse ist, die von dem Lernmodell M nicht gelernt worden ist, die Ausgabe des Lernmodells Werte einschließt, die anzeigen, ob das Bild zu jedem der mehreren Labels gehört oder nicht, und wobei für jedes Multi-Label-Abfragebild K Support-Bilder zufällig aus einem beschrifteten Datensatz DS entnommen werden, so dass jedes Support-Bild mindestens ein Label mit dem Multi-Label-Abfragebild gemeinsam hat;

erstes Berechnungsmittel, das dazu konfiguriert ist, wenn ein Multi-Label-Abfragebild in das Lernmodell eingegeben wird, einen ersten Verlust, basierend auf der Ausgabe des Lernmodells und einer Zielausgabe, zu berechnen;

Merkmalsgrößenerfassungsmittel, das dazu konfiguriert ist, eine Merkmalsgröße des Multi-Label-Abfragebildes und eine Merkmalsgröße eines der k Support-Bilder, die dem Multi-Label-Abfragebild entsprechen, zu erfassen, wobei die Merkmalsgrößen, basierend auf einem Parameter des Lernmodells, berechnet werden, wobei die jeweiligen Merkmalsgrößen Informationen sind, die ein Merkmal des Bildes anzeigen, und die Labels des Abfragebildes und des Support-Bildes teilweise Übereinstimmungen aufweisen;

zweites Berechnungsmittel, das dazu konfiguriert ist, einen zweiten Verlust, basierend auf der Merkmalsgröße des Multi-Label-Abfragebildes und der Merkmalsgröße des Support-Bildes, zu berechnen; und

Anpassungsmittel, das dazu konfiguriert ist, den Parameter, basierend auf dem ersten Verlust und dem zweiten Verlust, anzupassen.

## Revendications

1. Système d'apprentissage, comprenant :

des moyens de mise en œuvre d'un modèle d'apprentissage M configuré pour reconnaître des objets inclus dans une image de requête multi-étiquette, dans lequel l'image de requête est une image d'une nouvelle classe qui n'a pas été apprise par le modèle d'apprentissage M, la sortie du modèle d'apprentissage inclut des valeurs indiquant si l'image appartient ou non à chacune des multiples étiquettes, et dans lequel, pour chaque image de requête multi-étiquette, K images de support sont échantillonnées aléatoirement à partir d'un ensemble de données étiqueté DS de telle sorte que chaque image de support partage au moins une étiquette avec l'image de requête multi-étiquette ;

des premiers moyens de calcul configurés pour calculer, lorsque l'image de requête multi-étiquette est fournie en entrée au modèle d'apprentissage, une première perte sur la base de la sortie du modèle d'apprentissage et d'une sortie cible ;

des moyens d'acquisition de quantité caractéristique configurés pour acquérir une quantité caractéristique de l'image de requête multi-étiquette et une quantité caractéristique de l'une des k images de support correspondant à l'image de requête multi-étiquette, qui sont calculées sur la base d'un paramètre du modèle d'apprentissage, dans lequel les quantités caractéristiques respectives correspondent à des informations indiquant une caractéristique de l'image et les étiquettes de l'image de requête et l'image de support correspondent partiellement ;

des seconds moyens de calcul configurés pour calculer une seconde perte sur la base de la quantité caractéristique de l'image de requête multi-étiquette et de la quantité caractéristique de l'image de support ;

et des moyens d'ajustement configurés pour ajuster le paramètre sur la base de la première perte et de la seconde perte.

2. Système d'apprentissage selon la revendication 1,
dans lequel les seconds moyens de calcul sont configurés pour calculer la seconde perte de telle sorte que, à mesure qu'une différence entre la quantité caractéristique de l'image de requête multi-étiquette et la quantité caractéristique de l'image de support devient plus grande, la seconde perte devient plus grande.

3. Système d'apprentissage selon la revendication 1 ou la revendication 2, dans lequel les moyens d'acquisition de quantité caractéristique sont configurés pour acquérir une quantité caractéristique de chacune d'une pluralité de pièces de l'image de support, et

dans lequel les seconds moyens de calcul sont configurés pour calculer une quantité caractéristique moyenne sur la base de la quantité caractéristique de chacune de la pluralité de pièces de l'image de support, et pour acquérir la seconde perte sur la base de la quantité caractéristique de l'image de requête multi-étiquette et de la quantité caractéristique moyenne.

4. Système d'apprentissage selon l'une quelconque des revendications 1 à 3, dans lequel les moyens d'ajustement sont configurés pour calculer une perte totale sur la base de la première perte et de la seconde perte, et pour ajuster le paramètre sur la base de la perte totale.

5. Système d'apprentissage selon la revendication 4, dans lequel les moyens d'ajustement sont configurés pour calculer la perte totale sur la base de la première perte, de la seconde perte, et d'un coefficient de pondération spécifié par un créateur.

6. Système d'apprentissage selon l'une quelconque des revendications 1 à 5,

dans lequel le modèle d'apprentissage est configuré pour reconnaître trois étiquettes ou plus,
dans lequel, pour chaque combinaison des trois étiquettes ou plus, il existe un ensemble d'images qui inclut l'image de requête multi-étiquette et l'image de support,
dans lequel les premiers moyens de calcul sont configurés pour calculer, pour chaque combinaison des trois étiquettes ou plus, la première perte sur la base de l'image de requête multi-étiquette correspondant à la combinaison,
dans lequel les moyens d'acquisition de quantité caractéristique sont configurés pour acquérir, pour chaque combinaison des trois étiquettes ou plus, la quantité caractéristique de l'image de requête multi-étiquette correspondant à la combinaison et la quantité caractéristique de l'image de support correspondant à la combinaison, dans lequel les seconds moyens de calcul sont configurés pour calculer, pour chaque combinaison des trois étiquettes ou plus, la seconde perte sur la base de la quantité caractéristique de l'image de requête multi-étiquette correspondant à la combinaison et de la quantité caractéristique de l'image de support correspondant à la combinaison, et
dans lequel les moyens d'ajustement sont configurés pour ajuster le paramètre sur la base de la première perte et de la seconde perte qui sont calculées pour chaque combinaison des trois étiquettes ou plus.

7. Système d'apprentissage selon l'une quelconque des revendications 1 à 6,

dans lequel l'image de requête multi-étiquette est fournie en entrée à un premier modèle d'apprentissage,
dans lequel l'image de support est fournie en entrée à un second modèle d'apprentissage,
dans lequel le paramètre du premier modèle d'apprentissage et le paramètre du second modèle d'apprentissage sont partagés, dans lequel les premiers moyens de calcul sont configurés pour calculer la première perte sur la base du paramètre du premier modèle d'apprentissage,
dans lequel les moyens d'acquisition de quantité caractéristique sont configurés pour acquérir la quantité caractéristique de l'image de requête multi-étiquette calculée sur la base du paramètre du premier modèle d'apprentissage et la quantité caractéristique de l'image de support calculée sur la base du paramètre du second modèle d'apprentissage, et
dans lequel les moyens d'ajustement sont configurés pour ajuster chacun parmi le paramètre du premier modèle d'apprentissage et le paramètre du second modèle d'apprentissage.

8. Système d'apprentissage selon l'une quelconque des revendications 1 à 7,
dans lequel les seconds moyens de calcul sont configurés pour acquérir la seconde perte sur la base de la quantité caractéristique de l'image de requête multi-étiquette, de la quantité caractéristique de l'image de support, et d'un coefficient correspondant à une similarité d'étiquettes entre l'image de requête multi-étiquette et l'image de support.

9. Système d'apprentissage selon l'une quelconque des revendications 1 à 8, comprenant en outre des moyens d'acquisition de données configurés pour acquérir l'image de requête multi-étiquette et l'image de support à partir d'un groupe de données présentant une distribution à longue traîne pour des multi-étiquettes.

10. Système d'apprentissage selon l'une quelconque des revendications 1 à 9,

dans lequel le modèle d'apprentissage est configuré de telle sorte qu'une dernière couche d'un modèle qui a appris une autre étiquette autre qu'une pluralité d'étiquettes devant être reconnues est remplacée par une couche correspondant à la pluralité d'étiquettes, et

dans lequel les premiers moyens de calcul sont configurés pour calculer la première perte sur la base de la sortie du modèle d'apprentissage dans lequel la dernière couche est remplacée par la couche correspondant à la pluralité d'étiquettes, et sur la base de la sortie cible.

11. Procédé mis en œuvre par ordinateur, comprenant :

un modèle d'apprentissage M reconnaissant des objets inclus dans une image de requête multi-étiquette, dans lequel l'image de requête est une image d'une nouvelle classe qui n'a pas été apprise par le modèle d'apprentissage M, la sortie du modèle d'apprentissage inclut des valeurs indiquant si l'image appartient ou non à chacune des multiples étiquettes, et dans lequel, pour chaque image de requête multi-étiquette, K images de support sont échantillonnées aléatoirement à partir d'un ensemble de données étiqueté DS de telle sorte que chaque image de support partage au moins une étiquette avec l'image de requête multi-étiquette ;

une première étape de calcul consistant à calculer, lorsque l'image de requête multi-étiquette est fournie en entrée au modèle d'apprentissage, une première perte sur la base de la sortie du modèle d'apprentissage et d'une sortie cible ;

une étape d'acquisition de quantité caractéristique consistant à acquérir une quantité caractéristique de l'image de requête multi-étiquette et une quantité caractéristique de l'une des k images de support correspondant à l'image de requête multi-étiquette, qui sont calculées sur la base d'un paramètre du modèle d'apprentissage, dans lequel les quantités caractéristiques respectives correspondent à des informations indiquant une caractéristique de l'image et les étiquettes de l'image de requête et l'image de support correspondent partiellement ;

une seconde étape de calcul consistant à calculer une seconde perte sur la base de la quantité caractéristique de l'image de requête multi-étiquette et de la quantité caractéristique de l'image de support ; et,

une étape d'ajustement consistant à ajuster le paramètre sur la base de la première perte et de la seconde perte.

12. Programme comprenant des instructions qui, lorsqu'elles sont mises en œuvre par un ordinateur, amènent l'ordinateur à fonctionner comme :

des moyens de mise en œuvre d'un modèle d'apprentissage M configuré pour reconnaître des objets inclus dans une image de requête multi-étiquette, dans lequel l'image de requête est une image d'une nouvelle classe qui n'a pas été apprise par le modèle d'apprentissage M, la sortie du modèle d'apprentissage inclut des valeurs indiquant si l'image appartient ou non à chacune des multiples étiquettes, et dans lequel, pour chaque image de requête multi-étiquette, K images de support sont échantillonnées aléatoirement à partir d'un ensemble de données étiqueté DS de telle sorte que chaque image de support partage au moins une étiquette avec l'image de requête multi-étiquette ;

des premiers moyens de calcul configurés pour calculer, lorsque l'image de requête multi-étiquette est fournie en entrée au modèle d'apprentissage, une première perte sur la base de la sortie du modèle d'apprentissage et d'une sortie cible ;

des moyens d'acquisition de quantité caractéristique configurés pour acquérir une quantité caractéristique de l'image de requête multi-étiquette et une quantité caractéristique de l'une des k images de support correspondant à l'image de requête multi-étiquette, qui sont calculées sur la base d'un paramètre du modèle d'apprentissage, dans lequel les quantités caractéristiques respectives correspondent à des informations indiquant une caractéristique de l'image et les étiquettes de l'image de requête et l'image de support correspondent partiellement ;

des seconds moyens de calcul configurés pour calculer une seconde perte sur la base de la quantité caractéristique de l'image de requête multi-étiquette et de la quantité caractéristique de l'image de support ; et,

des moyens d'ajustement configurés pour ajuster le paramètre sur la base de la première perte et de la seconde perte.

# FIG.1

10

## SERVER

CONTROL UNIT ──11

STORAGE UNIT ──12

COMMUNICATION UNIT ──13

S

N

NETWORK

20

## CREATOR TERMINAL

CONTROL UNIT ──21

STORAGE UNIT ──22

COMMUNICATION UNIT ──23

OPERATION UNIT ──24

DISPLAY UNIT ──25

30

## LEARNING TERMINAL

CONTROL UNIT ──31

STORAGE UNIT ──32

COMMUNICATION UNIT ──33

OPERATION UNIT ──34

DISPLAY UNIT ──35

# FIG.2

# FIG.3

10

**SERVER**

100

**DATA STORAGE UNIT**

DB

IMAGE DATABASE

30

**LEARNING TERMINAL**

300

**DATA STORAGE UNIT**

DS

DATA SET

| LEARNING MODEL FOR QUERY IMAGE | M1 |
| LEARNING MODEL FOR SUPPORT IMAGES | M2 |

M

| DATA ACQUISITION UNIT | 301 |
| FIRST CALCULATION UNIT | 302 |
| FEATURE AMOUNT ACQUISITION UNIT | 303 |
| SECOND CALCULATION UNIT | 304 |
| ADJUSTMENT UNIT | 305 |

# FIG.4

DS

DATA SET

RANDOM SAMPLING

RANDOM SAMPLING

QUERY SET

$x_Q$

XXX SPORT

M1

Embedding

$f(x_Q)$

EMBEDDED VECTOR

LOSS FUNCTION

Multilabel cross entropy loss (FIRST LOSS)

$L_{BCE}$

PARAMETER IS SHARED

M2

Embedding

MEASURE SIMILARITY

Contrastive loss (SECOND LOSS)

$L_{CL}$

$x_S$

COMBINATIONS OF N DIFFERENT SUPPORT IMAGES (N=1 IN EMBODIMENT)

AVERAGE EMBEDDED VECTOR

$\overline{f(x_S)}$

EP 4 040 346 B1

# FIG.5

DS

| IMAGE | LABEL THAT IS CORRECT ANSWER |
|-------|------------------------------|
| 00001.jpg | [0,1,1,1,0,0,0] |
| 00002.jpg | [0,1,0,0,0,0,0] |
| 00003.jpg | [0,1,1,0,0,0,0] |
| 00004.jpg | [0,0,1,0,1,0,0] |
| 00005.jpg | [0,1,0,1,1,0,0] |
| 00006.jpg | [1,0,0,0,0,0,0] |
| 00007.jpg | [0,1,0,0,0,0,1] |
| . . . | . . . |

# FIG.6

# FIG.7

# FIG.8

EPISODE 1 (ONLY LABEL 1)

QUERY IMAGE

SUPPORT IMAGES

EPISODE 2 (LABEL 1 AND LABEL 2)

QUERY IMAGE

SUPPORT IMAGES

EPISODE 15 (LABEL 2 AND LABEL 3)

QUERY IMAGE

SUPPORT IMAGES

FIG.9

START

RANDOMLY SAMPLE QUERY IMAGE AND SUPPORT IMAGES — S1

INPUT QUERY IMAGE TO LEARNING MODEL — S2

CALCULATE FIRST LOSS — S3

INPUT SUPPORT IMAGES TO LEARNING MODEL — S4

ACQUIRE EMBEDDED VECTOR OF QUERY IMAGE AND EMBEDDED VECTOR OF EACH SUPPORT IMAGE — S5

CALCULATE AVERAGE VALUE OF EMBEDDED VECTORS OF SUPPORT IMAGES — S6

CALCULATE SECOND LOSS — S7

CALCULATE TOTAL LOSS — S8

ADJUST PARAMETER — S9

S10
PROCESSING OF ALL EPISODES HAS BEEN EXECUTED? — N

Y
S11
LEARNING HAS BEEN REPEATED FOR PREDETERMINED NUMBER OF TIMES? — Y

N
S12
REPEAT PARAMETER ADJUSTMENT

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEONID KARLINSKY** ; **JOSEPH SHTOK** ; **SIVAN HARARY** ; **ELI SCHWARTZ** ; **AMIT AIDES** ; **ROGERIO FERIS** ; **RAJA GIRYES** ; **ALEX M BRONSTEIN**. Rep Met: Representative-based metric learning for classification and few-shot object detection. *CVPR*, 2019

- **JIANYI LI et al.** *Few-Shot Image Classification via Contrastive Self-Supervised Learning*